# EUROPEAN PATENT APPLICATION

(11) **EP 4 782 734 A1**
(43) Date of publication of application: **29.07.2026**
(21) Application number: 24868254.4
(22) Date of filing: 17.09.2024
(51) Int. Cl.: F16K 31/122, F16K 17/30, F16K 25/00

(54) **VALVE**

(30) Priority: 21.09.2023 JP 2023155584
(71) Applicant: Eagle Industry Co., Ltd., Minato-ku Tokyo 105-8587 (JP)
(72) Inventor: KURIHARA, Daichi, Tokyo 105-8587 (JP); FUKUDOME, Kohei, Tokyo 105-8587 (JP)
(74) Representative: Patentquadrat Patentanwaltsgesellschaft mbH
(86) International application number: PCT/JP2024/033139
(87) International publication number: WO 2025/063177

(57) **Abstract**

There is provided a valve capable of smoothly changing the pressure of a back-pressure fluid. A valve includes a housing 60 having a high-pressure space S2 into which a high-pressure fluid Pd flows, a back-pressure space S3 into which a back-pressure fluid Pb flows, and a passage 65a configured to allow a communication between the high-pressure space S2 and the back-pressure space S3; a valve body 61 that controls an opening degree of the passage 65a; and a biasing member 62 for biasing the valve body 61 in a valve opening direction. The valve body 61 has a high-pressure receiving surface (A - B) that receives pressure in the high-pressure space S2 as a force in the valve opening direction, and a back-pressure receiving surface A that receives pressure in the back-pressure space S3 as a force in a valve closing direction.

## Description

### {TECHNICAL FIELD}

The present invention relates to a valve, for example, a valve that controls pressure.

### {BACKGROUND ART}

A scroll compressor is one type of compressor used in various industrial fields, and this type of compressor is used, for example, in a wide range of applications such as refrigeration cycles owing not only to a high compression efficiency but also to low noise.

The scroll compressor includes a scroll compression mechanism composed of a fixed scroll including a spiral wrap and a movable scroll including a spiral wrap; an eccentric mechanism attached to a rotating shaft for eccentrically rotating the movable scroll; and the like, and has a structure in which the movable scroll slides relative to the fixed scroll while eccentrically rotating with respect to the fixed scroll, thereby pressurizing a fluid that is a refrigerant supplied from a low-pressure chamber on an outer-diameter side of both scrolls, and discharging the high-pressure refrigerant from a discharge hole formed at the center of the fixed scroll.

In this type of scroll compressor, when the pressure in a discharge chamber from which the refrigerant compressed by the scroll compression mechanism is discharged increases, a force acts in a direction in which the movable scroll is separated from the fixed scroll.

A scroll compressor of Patent Citation 1 is provided with a communication passage that allows communication between a discharge chamber and a back-pressure chamber formed on a back surface side of a movable scroll, and an orifice is provided in the communication passage. Since a portion of a refrigerant compressed in the discharge chamber is depressurized by the orifice, is supplied to the back-pressure chamber, and presses the movable scroll toward a fixed scroll, the movable scroll is prevented from separating from the fixed scroll.

In addition, the scroll compressor includes a pressure adjustment valve that adjusts the pressure in the back-pressure chamber by releasing the pressure to a low-pressure chamber. When a force to push a valve body in a valve opening direction due to the pressure in the back-pressure chamber exceeds a force to push the valve body in a valve closing direction due to the pressure in the low-pressure chamber and the biasing force of a spring, the pressure adjustment valve opens, so that the refrigerant in the back-pressure chamber flows to the low-pressure chamber, and the pressure in the back-pressure chamber decreases. Accordingly, a situation in which the movable scroll is excessively pressed against the fixed scroll due to an increase in pressure in the back-pressure chamber, thereby obstructing smooth operation of the movable scroll, is prevented.

### {CITATION LIST}

### {Patent Literature}

Patent Citation 1: WO 2022/009769 (Pages 8 and 9, FIG. 1)

### {SUMMARY OF INVENTION}

### {Technical Problem}

However, since the scroll compressor of Patent Citation 1 has a structure in which a portion of the refrigerant in the discharge chamber is supplied to the back-pressure chamber in a fixed amount via the orifice, a change in pressure in the back-pressure chamber is small with respect to a change in pressure in the discharge chamber, and it takes time for the pressure in the back-pressure chamber to reach a proper pressure, which is a problem.

The present invention has been made in view of such a problem, and an object of the present invention is to provide a valve capable of smoothly changing the pressure of a back-pressure fluid.

### {Solution to Problem}

In order to solve the foregoing problem, a valve according to the present invention includes a housing having a high-pressure space into which a high-pressure fluid flows, a back-pressure space into which a back-pressure fluid flows, and a passage configured to allow a communication between the high-pressure space and the back-pressure space; a valve body that controls an opening degree of the passage; and a biasing member configured to bias the valve body in a valve opening direction, wherein the valve body has a high-pressure receiving surface configured to receive pressure in the high-pressure space as a force in the valve opening direction, and a back-pressure receiving surface configured to receive pressure in the back-pressure space as a force in a valve closing direction. According to the feature of the present invention, since the opening degree of the passage during start-up is properly guaranteed, and the opening degree of the passage is variable during operation, the pressure of the back-pressure fluid can be smoothly adjusted.

It may be preferable that the back-pressure receiving surface is larger than the high-pressure receiving surface. According to this preferable configuration, the action of the pressure of the back-pressure fluid which is relatively lower than the pressure of the high-pressure fluid can be increased to improve responsiveness.

It may be preferable that the housing has a low-pressure space into which a low-pressure fluid flows, and the valve body has a low-pressure receiving surface that receives pressure in the low-pressure space as a force in the valve opening direction. According to this preferable configuration, the accuracy of adjusting the pressure of the back-pressure fluid is improved.

It may be preferable that a sealing member is provided between the high-pressure space and the low-pressure space. According to this preferable configuration, valve internal leakage from the high-pressure space to the low-pressure space can be prevented, and a reduction in efficiency can be prevented.

It may be preferable that the biasing member is disposed in the low-pressure space. According to this preferable configuration, the biasing member can be disposed such that the flow of the back-pressure fluid in the back-pressure space is not obstructed.

It may be preferable that the valve is provided with a stopper configured to restrict a relative movement of the valve body with respect to the housing. According to this preferable configuration, since the maximum opening degree of the passage can be kept substantially constant, the pressure of the back-pressure fluid can be adjusted in a short time during start-up.

It may be preferable that the valve body is configured for closing the passage. According to this preferable configuration, an excessive increase in the pressure of the back-pressure fluid can be reliably suppressed.

It may be preferable that the passage has a tapered shape. According to this preferable configuration, the flow efficiency is good even when the valve opening degree is narrow.

It may be preferable that the valve body has a spherical shape at a region facing the tapered shape of the passage. According to this preferable configuration, since the valve body comes into line contact with the passage in a circumferential direction, both sealing performance and opening/closing response can be achieved.

### {BRIEF DESCRIPTION OF DRAWINGS}

FIG. 1 is a schematic configuration view illustrating a scroll compressor to which a valve according to a first embodiment of the present invention is applied.
FIG. 2 is a cross-sectional view of the valve according to the first embodiment of the present invention.
FIG. 3 is a cross-sectional view of a valve according to a second embodiment of the present invention.

### {DESCRIPTION OF EMBODIMENTS}

Modes for implementing a valve according to the present invention will be described below based on embodiments.

### {First embodiment}

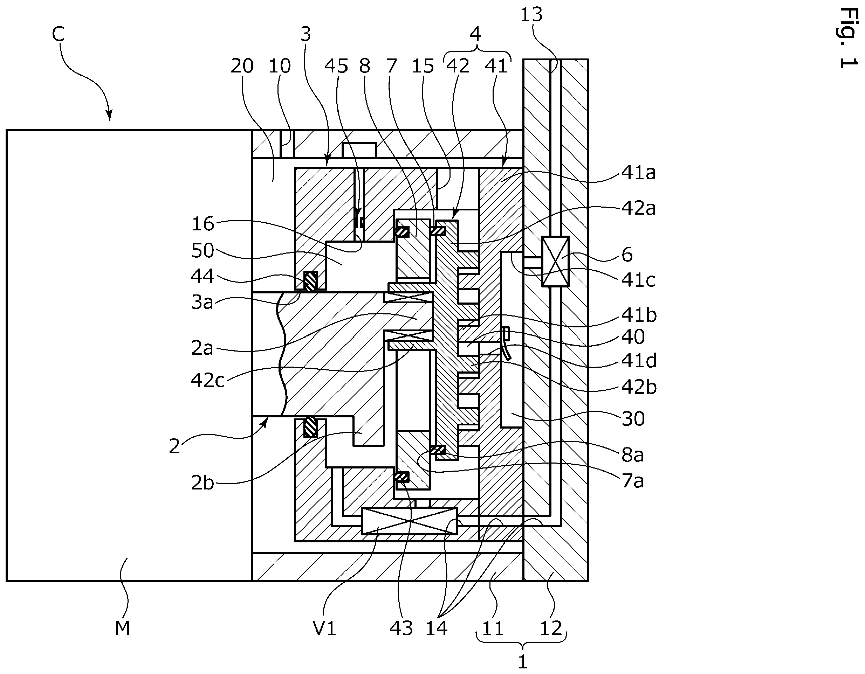

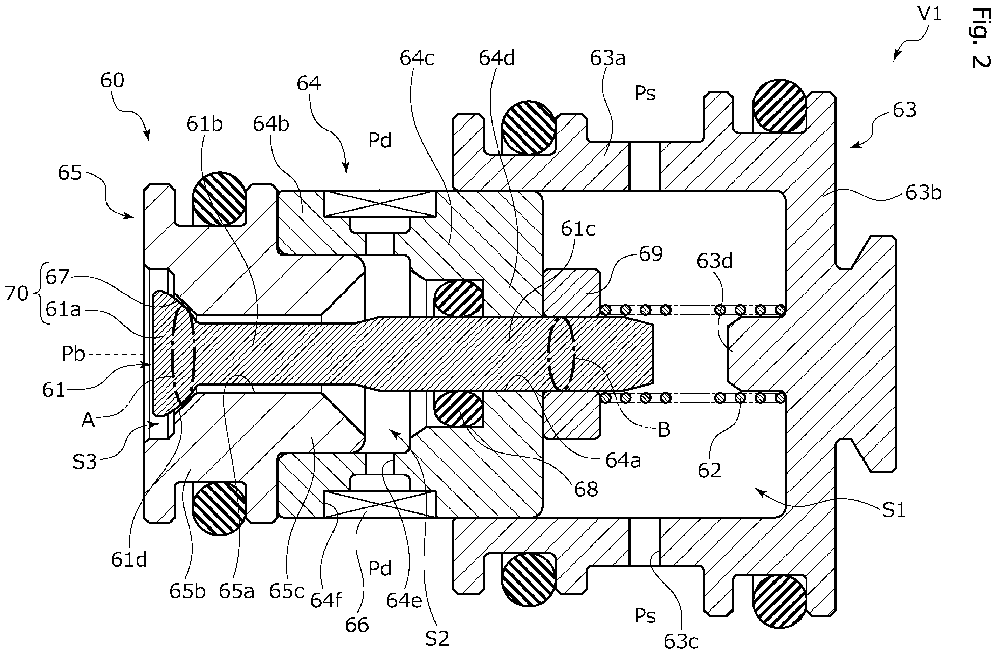

A valve according to a first embodiment of the present invention will be described with reference to FIGS. 1 and 2. The valve of the present invention is applied to a rotary machine including an eccentric mechanism, for example, a scroll compressor C that suctions, compresses, and discharges a refrigerant as a fluid used in an air conditioning system for an automobile or the like. Incidentally, in the present embodiment, the refrigerant is a gas, and is mixed with lubricating oil in the form of a mist.

First, the scroll compressor C will be described. As illustrated in FIG. 1, the scroll compressor C is mainly composed of a housing 1, a rotary shaft 2, an inner casing 3, a scroll compression mechanism 4, a side seal 7, a thrust plate 8, and a drive motor M.

The housing 1 is composed of a casing 11 having a cylindrical shape, and a cover 12 that closes an opening of the casing 11. An opening of the casing 11 on the side axially opposite to the opening closed by the cover 12 is closed by the drive motor M.

Inside the casing 11, a low-pressure chamber 20 to which a low-pressure refrigerant, that is, a suction fluid Ps as a low-pressure fluid, is supplied from a refrigerant circuit (not illustrated) through a suction port 10, a high-pressure chamber 30 serving as a discharge chamber from which a high-pressure refrigerant compressed by the scroll compression mechanism 4, that is, a discharge fluid Pd as a high-pressure fluid, is discharged, and a back-pressure chamber 50 to which a portion of the refrigerant compressed by the scroll compression mechanism 4 together with the lubricating oil, that is, a control fluid Pb as a back-pressure fluid, is supplied via a back-pressure control valve V1 are formed. Incidentally, the back-pressure chamber 50 is formed inside the inner casing 3 having a cylindrical shape that is accommodated inside the casing 11.

A discharge communication passage 13 that allows communication between the refrigerant circuit (not illustrated) and the high-pressure chamber 30 is formed in the cover 12. In addition, a part of a back-pressure communication passage 14 that allows communication between the high-pressure chamber 30 and the back-pressure chamber 50 is formed in the cover 12 by branching off from the discharge communication passage 13. Incidentally, an oil separator 6 that separates the lubricating oil from the refrigerant is provided in the discharge communication passage 13.

The inner casing 3 is fixed in a state where an axial end portion of the inner casing 3 abuts against an end plate 41a of a fixed scroll 41 constituting the scroll compression mechanism 4. In addition, a suction communication passage 15 penetrating through the inner casing 3 in a radial direction is formed in a side wall of the inner casing 3. That is, the low-pressure chamber 20 is formed from the outside of the inner casing 3 to the inside of the inner casing 3 via the suction communication passage 15. The suction fluid Ps supplied to the inside of the inner casing 3 through the suction communication passage 15 is suctioned into the scroll compression mechanism 4.

The scroll compression mechanism 4 is mainly composed of the fixed scroll 41 fixed to the cover 12 in a sealed manner, and a movable scroll 42 accommodated inside the inner casing 3.

The fixed scroll 41 is made of metal, and includes a wrap 41b having a spiral shape that protrudes from a front surface of the end plate 41a having a disk shape, that is, an end surface of the end plate 41a which faces the movable scroll 42, toward the movable scroll 42. In addition, in the fixed scroll 41, a recess 41c recessed in a direction opposite to the cover 12 is formed on a back surface of the end plate 41a, that is, on an inner-diameter side of an end surface of the end plate 41a which abuts against the cover 12, and the high-pressure chamber 30 is defined by the recess 41c and the cover 12.

The movable scroll 42 is made of metal, and includes a wrap 42b having a spiral shape that protrudes from a front surface of an end plate 42a having a disk shape, that is, an end surface of the end plate 42a which faces the fixed scroll 41, toward the fixed scroll 41. In addition, a boss 42c protruding from the center of a back surface of the end plate 42a is formed on the movable scroll 42. An eccentric portion 2a formed in the rotary shaft 2 is inserted and fitted into the boss 42c so as to be rotatable relative to the boss 42c. Incidentally, in the present embodiment, the eccentric portion 2a of the rotary shaft 2 and a counterweight portion 2b protruding from the rotary shaft 2 in a radially outward direction constitute an eccentric mechanism that eccentrically rotates the rotary shaft 2.

When the rotary shaft 2 is rotationally driven by the drive motor M, the eccentric portion 2a rotates eccentrically, and the movable scroll 42 slides relative to the fixed scroll 41 while performing eccentric rotation in a state where the movable scroll 42 maintains the posture. At this time, the movable scroll 42 rotates eccentrically with respect to the fixed scroll 41, and as the movable scroll 42 rotates, the contact positions between the wraps 41b and 42b move sequentially in a rotation direction, and a compression chamber 40 formed between the wraps 41b and 42b gradually decreases while moving toward the center. Accordingly, the suction fluid Ps suctioned into the compression chamber 40 from the low-pressure chamber 20 formed on an outer-diameter side of the scroll compression mechanism 4 is compressed, and finally, the high-pressure discharge fluid Pd is discharged into the high-pressure chamber 30 through a discharge hole 41d provided at the center of the fixed scroll 41.

The side seal 7 is made of resin, has a rectangular cross-section and an annular shape when viewed in an axial direction, and is fixed to the back surface of the end plate 42a of the movable scroll 42. A sliding surface 7a that abuts against a sliding surface 8a formed on the thrust plate 8 is formed on the side seal 7.

The thrust plate 8 is made of metal and has an annular shape, and a seal ring 43 is fixed to the thrust plate 8. The seal ring 43 abuts against an inner peripheral end surface of the inner casing 3. Accordingly, the thrust plate 8 functions as a thrust bearing that receives an axial load of the movable scroll 42 via the side seal 7.

In addition, the side seal 7 and the seal ring 43 partition the low-pressure chamber 20 formed on the outer-diameter side of the movable scroll 42 and the back-pressure chamber 50 formed on a back surface side of the movable scroll 42 inside the inner casing 3. The back-pressure chamber 50 is formed as a sealed space by sealing a gap between a through-hole 3a provided at the center of the inner casing 3 and the rotary shaft 2 inserted through the through-hole 3a using a seal ring 44 fixed to an inner periphery of the through-hole 3a.

In addition, the back-pressure control valve V1 serving as a valve is provided in the back-pressure communication passage 14 that is formed across the cover 12, the fixed scroll 41, and the inner casing 3 and that allows communication between the high-pressure chamber 30 and the back-pressure chamber 50. In other words, the back-pressure control valve V1 is provided in the interior of the housing 1, which is isolated from the outside air.

A portion of the discharge fluid Pd in the high-pressure chamber 30 which is supplied to the back-pressure control valve V1 together with the lubricating oil separated by the oil separator 6 is adjusted to the pressure of the control fluid Pb, and is supplied to the back-pressure chamber 50.

Incidentally, a pressure relief hole 16 that penetrates through the inner casing 3 in the radial direction and that allows communication between the low-pressure chamber 20 and the back-pressure chamber 50 is formed in the inner casing 3, and an orifice 45 is provided in the pressure relief hole 16.

Next, the back-pressure control valve V1 serving as a valve in the present embodiment will be described with reference to FIG. 2. Hereinafter, the left and right sides of FIG. 2 when viewed from the front side will be described as the left and right sides of the back-pressure control valve V1.

As illustrated in FIG. 2, the back-pressure control valve V1 of the first embodiment is mainly composed of a housing 60, a valve body 61, and a coil spring 62 serving as a biasing member for biasing the valve body 61 in an unseating direction, that is, a valve opening direction.

The housing 60 partitions a low-pressure space S1 communicating with the low-pressure chamber 20, a high-pressure space S2 communicating with the high-pressure chamber 30, and a back-pressure space S3 communicating with the back-pressure chamber 50. In addition, in the housing 60, a valve hole 65a serving as a passage that allows communication between the high-pressure space S2 and the back-pressure space S3 and a through-hole 64a that allows communication between the low-pressure space S1 and the high-pressure space S2 are formed. Incidentally, the housing 60 may partition at least a part of the low-pressure space S1, the high-pressure space S2, and the back-pressure space S3.

The housing 60 is composed of a first divided body 63, a second divided body 64, and a third divided body 65 arranged in order from the right side.

The first divided body 63 includes a peripheral wall 63a and a side wall 63b, and is formed in a cylindrical shape with a side wall that is open toward the left side in the axial direction.

The inner side of the peripheral wall 63a is formed in a cylindrical shape extending in the axial direction. Communication holes 63c penetrating through the peripheral wall 63a in the radial direction and communicating with the low-pressure chamber 20 are provided in the peripheral wall 63a. In the present embodiment, two communication holes 63c are evenly spaced apart from each other, and the number or disposition of the communication holes 63c may be changed as appropriate.

The inner diameter of the peripheral wall 63a is substantially constant along the axial direction.

The side wall 63b is formed in a disk shape that closes an axial right end of the peripheral wall 63a.

In addition, a protrusion 63d having a columnar shape that protrudes from the center of a left end surface of the side wall 63b toward the left side in the axial direction is formed in the side wall 63b. An axial right end of the coil spring 62 is externally fitted to the protrusion 63d. Accordingly, the axial right end of the coil spring 62 is positioned in the radial direction. In addition, the axial right end of the coil spring 62 abuts against the side wall 63b.

The second divided body 64 includes a large inner-diameter peripheral wall 64b, a medium inner-diameter peripheral wall 64c, and a small inner-diameter peripheral wall 64d in order from the left side in the axial direction, and is formed in a cylindrical shape extending in the axial direction. The respective outer peripheral surfaces of the large inner-diameter peripheral wall 64b, the medium inner-diameter peripheral wall 64c, and the small inner-diameter peripheral wall 64d are substantially flush with each other. Hereinafter, the outer peripheral surface is simply referred to as an outer peripheral surface of the second divided body 64.

The outer diameter of the second divided body 64 is substantially constant along the axial direction, and is substantially the same as or slightly larger than the inner diameter of the peripheral wall 63a of the first divided body 63.

The large inner-diameter peripheral wall 64b has a cylindrical shape extending in the axial direction. Communication holes 64e penetrating through the large inner-diameter peripheral wall 64b in the radial direction and communicating with the high-pressure space S2 are formed in the large inner-diameter peripheral wall 64b. In the present embodiment, two communication holes 64e are evenly spaced apart from each other, and the number or disposition of the communication holes 64e may be changed as appropriate.

An outer-diameter end of each of the communication holes 64e forms a recess 64f having an annular shape that is increased in diameter and is open toward the outer-diameter side, and communicates with the high-pressure chamber 30. A filter 66 for removing foreign matter such as contaminants contained in the refrigerant is provided in the recess 64f.

The medium inner-diameter peripheral wall 64c has a cylindrical shape extending from a right end of the large inner-diameter peripheral wall 64b toward a right side in the axial direction. An inner diameter of the medium inner-diameter peripheral wall 64c is smaller than an inner diameter of the large inner-diameter peripheral wall 64b.

The small inner-diameter peripheral wall 64d has a cylindrical shape extending from a right end of the medium inner-diameter peripheral wall 64c toward the right side in the axial direction. An inner diameter of the small inner-diameter peripheral wall 64d is smaller than the inner diameter of the medium inner-diameter peripheral wall 64c.

In addition, the through-hole 64a penetrating through the small inner-diameter peripheral wall 64d in the axial direction is formed at the radial center of the small inner-diameter peripheral wall 64d.

A right end of the second divided body 64 is press-fitted and fixed to the inner side of the peripheral wall 63a of the first divided body 63. A space surrounded by the peripheral wall 63a and the side wall 63b of the first divided body 63 and the small inner-diameter peripheral wall 64d of the second divided body 64 forms the low-pressure space S1 into which the suction fluid Ps flows.

The third divided body 65 includes a large outer-diameter peripheral wall 65b and a small outer-diameter peripheral wall 65c in order from the left side in the axial direction, and is formed in a tubular shape with an outer step.

The large outer-diameter peripheral wall 65b has a tubular shape extending in the axial direction.

The small outer-diameter peripheral wall 65c has a cylindrical shape extending from a right end of the large outer-diameter peripheral wall 65b toward the right side in the axial direction. An outer diameter of the small outer-diameter peripheral wall 65c is smaller than an outer diameter of the large outer-diameter peripheral wall 65b.

The outer diameter of the small outer-diameter peripheral wall 65c is substantially constant along the axial direction, and is substantially the same as or slightly larger than the inner diameter of the large inner-diameter peripheral wall 64b of the second divided body 64.

The valve hole 65a penetrating through the third divided body 65 in the axial direction and communicating with the high-pressure space S2 and the back-pressure space S3 is provided at the radial center of the large outer-diameter peripheral wall 65b and the small outer-diameter peripheral wall 65c, that is, the radial center of the third divided body 65.

A tapered surface that increases the diameter of the valve hole 65a toward the left is formed on the inner-diameter side of the large outer-diameter peripheral wall 65b. The tapered surface forms a valve seat 67 from which a large-diameter body portion 61a of the valve body 61 comes into contact with and separates. Namely, the large-diameter body portion 61a and the valve seat 67 form a valve 70 that controls the passing flow rate or the opening and closing of the flow passage as the housing 60 and the valve body 61 come into contact with and separate from each other.

In addition, the back-pressure space S3 communicating with the back-pressure chamber 50 is formed at a left end on the inner-diameter side of the large outer-diameter peripheral wall 65b. The back-pressure space S3 is recessed from a left end surface of the large outer-diameter peripheral wall 65b toward the right side in the axial direction, communicates with the valve hole 65a, and is open toward the left side in the axial direction.

The small outer-diameter peripheral wall 65c of the third divided body 65 is press-fitted and fixed to the inner side of the large inner-diameter peripheral wall 64b of the second divided body 64. In addition, the large outer-diameter peripheral wall 65b of the third divided body 65 abuts against the large inner-diameter peripheral wall 64b of the second divided body 64, so that the third divided body 65 is positioned in the axial direction. A space surrounded by the large inner-diameter peripheral wall 64b, the medium inner-diameter peripheral wall 64c, and the small inner-diameter peripheral wall 64d of the second divided body 64 and the third divided body 65 forms the high-pressure space S2 into which the discharge fluid Pd flows.

The valve body 61 includes the large-diameter body portion 61a, a small-diameter body portion 61b, and a medium-diameter body portion 61c in order from the left side in the axial direction, and is formed in a stepped columnar shape.

The large-diameter body portion 61a has a curved surface 61d that is formed as a part of a spherical shape and that is reduced in diameter from a left end of the large-diameter body portion 61a toward the right side in the axial direction.

The large-diameter body portion 61a is disposed across the high-pressure space S2 on the axial right side of the valve seat 67 and the back-pressure space S3 on the axial left side of the valve seat 67. Namely, each of the pressure of the control fluid Pb and the pressure of the discharge fluid Pd acts on the large-diameter body portion 61a.

The small-diameter body portion 61b is formed in a columnar shape extending from a right end of the large-diameter body portion 61a toward the right side in the axial direction. A diameter of the small-diameter body portion 61b is substantially the same as a minimum diameter of the large-diameter body portion 61a.

The small-diameter body portion 61b is inserted through the valve hole 65a.

The medium-diameter body portion 61c is formed in a columnar shape that extends from a right end of the small-diameter body portion 61b toward the right side in the axial direction with an increasing diameter, extends toward the right side in the axial direction with a substantially constant diameter, and then extends toward the right side in the axial direction with a decreasing diameter. A maximum diameter of the medium-diameter body portion 61c is larger than the diameter of the small-diameter body portion 61b, but is smaller than a maximum diameter of the large-diameter body portion 61a. In addition, a minimum diameter of the medium-diameter body portion 61c is substantially the same as the diameter of the small-diameter body portion 61b.

The medium-diameter body portion 61c is inserted through the through-hole 64a, and is disposed across the low-pressure space S1 and the high-pressure space S2. Namely, each of the pressure of the discharge fluid Pd and the pressure of the suction fluid Ps acts on the medium-diameter body portion 61c.

An O-ring 68 serving as a sealing member is externally fitted to the axial center of the medium-diameter body portion 61c. The O-ring 68 is internally fitted to the medium inner-diameter peripheral wall 64c of the second divided body 64. The O-ring 68 seals a gap between the medium-diameter body portion 61c and the medium inner-diameter peripheral wall 64c while allowing the valve body 61 to move in the axial direction.

In addition, the small inner-diameter peripheral wall 64d is continuous with the medium inner-diameter peripheral wall 64c on the axial right side of the medium inner-diameter peripheral wall 64c, that is, on the low-pressure space S1 side. Namely, the O-ring 68 seals a gap between the low-pressure space S1 and the high-pressure space S2. In addition, since the O-ring 68 abuts against the small inner-diameter peripheral wall 64d, the movement of the O-ring 68 is prevented even when the O-ring 68 receives a force to move the O-ring 68 toward the right side in the axial direction due to a pressure difference between the pressure of the suction fluid Ps flowing into the low-pressure space S1 and the pressure of the discharge fluid Pd flowing into the high-pressure space S2.

In addition, an axial right end of the medium-diameter body portion 61c is press-fitted and fixed to a stopper 69. The stopper 69 is formed in an annular shape. An inner diameter of the stopper 69 is substantially the same as or slightly smaller than an outer diameter of the medium-diameter body portion 61c.

A right end of the medium-diameter body portion 61c protrudes toward the right side in the axial direction beyond an axial right end edge of the stopper 69, and an axial left end of the coil spring 62 is externally fitted to the right end. Accordingly, the axial left end of the coil spring 62 is positioned in the radial direction. In addition, the axial left end of the coil spring 62 abuts against the stopper 69.

As described above, in the valve body 61, the pressure of each of the control fluid Pb and the discharge fluid Pd acts on the large-diameter body portion 61a, and the pressure of each of the discharge fluid Pd and the suction fluid Ps acts on the medium-diameter body portion 61c.

An effective pressure receiving surface serving as a back-pressure receiving surface of the valve body 61 on which the pressure of the control fluid Pb acts is substantially the same as a flow passage cross-section A of the valve seat 67 at the region where the large-diameter body portion 61a is in line contact with the valve seat 67 in a circumferential direction in a state where the large-diameter body portion 61a is seated on the valve seat 67. Hereinafter, the effective pressure receiving surface of the valve body 61 on which the pressure of the control fluid Pb acts is referred to as an "effective pressure receiving surface A".

An effective pressure receiving surface serving as a high-pressure receiving surface of the valve body 61 on which the pressure of the discharge fluid Pd acts is substantially the same as a portion of the flow passage cross-section A of the valve seat 67 at the region where the large-diameter body portion 61a is in line contact with the valve seat 67 in the circumferential direction in a state where the large-diameter body portion 61a is seated on the valve seat 67, the portion being located on the outer-diameter side with respect to a cross-section B of the medium-diameter body portion 61c. Hereinafter, the effective pressure receiving surface of the valve body 61 on which the pressure of the discharge fluid Pd acts is referred to as an "effective pressure receiving surface (A - B)".

Namely, the effective pressure receiving surface A of the valve body 61 on which the pressure of the control fluid Pb acts is wider than the effective pressure receiving surface (A - B) of the valve body 61 on which the pressure of the discharge fluid Pd acts (A > (A -B)).

An effective pressure receiving surface serving as a low-pressure receiving surface of the valve body 61 on which the pressure of the suction fluid Ps acts is substantially the same as the cross-section B of the medium-diameter body portion 61c. Hereinafter, the effective pressure receiving surface of the valve body 61 on which the pressure of the suction fluid Ps acts is referred to as an "effective pressure receiving surface B".

Next, the opening and closing operation of the back-pressure control valve V1 will be described. In the housing 60, the suction fluid Ps flows into the low-pressure space S1, the discharge fluid Pd flows into the high-pressure space S2, and the control fluid Pb flows into the back-pressure space S3.

The valve body 61 is pushed toward the left side in the axial direction by a force (F_{Ps} = Ps x B) generated due to the pressure of the suction fluid Ps acting on the effective pressure receiving surface B, a force (F_{Pd} = Pd x (A - B)) generated due to the pressure of the discharge fluid Pd acting on the effective pressure receiving surface (A - B), and a biasing force (F_{b}) of the coil spring 62 (that is, with a leftward direction defined as positive, a force F₁ = F_{Ps} + F_{Pd} + F_{b} acts on the valve body 61).

In addition, the valve body 61 is pushed toward the right side in the axial direction by a force (F_{Pb} = Pb x A) generated due to the pressure of the control fluid Pb acting on the effective pressure receiving surface A (that is, with a rightward direction defined as positive, a force F₂ = F_{Pb} acts on the valve body 61).

When the force F₁ exceeds the force F₂, the valve body 61 moves toward the left side in the axial direction (force F₁ > force F₂). Then, the stopper 69 abuts against the small inner-diameter peripheral wall 64d of the second divided body 64 of the housing 60, so that the movement of the stopper 69 toward the left side in the axial direction is restricted. In this state, the opening degree of the valve 70 is at its maximum. In more detail, it is preferable that the opening degree of the valve 70 is larger than an opening degree of a fixed orifice in Patent Citation 1.

Here, in the present embodiment, the biasing force (F_{b}) of the coil spring 62 and the effective pressure receiving surfaces A and B are adjusted such that the opening degree of the valve 70 is at its maximum when the respective pressures of the suction fluid Ps, the discharge fluid Pd, and the control fluid Pb are substantially the same. That is, the back-pressure control valve V1 is a normally open type.

In this regard, in more detail, when the scroll compressor C is stopped for a long period of time, the respective pressures of the suction fluid Ps, the discharge fluid Pd, and the control fluid Pb may be balanced and become substantially the same.

In such case, when the scroll compressor C is started up, the pressure of the discharge fluid Pd slightly increases, whereas the pressure of the suction fluid Ps slightly decreases. At this time, the pressure of the suction fluid Ps is higher than the range of pressure of the suction fluid Ps in a normal operation state during continuous operation, and the opening degree of the valve 70 remains at its maximum.

Accordingly, since a large amount of the discharge fluid Pd passes through the valve 70, and is supplied to the back-pressure chamber 50, the pressure of the control fluid Pb can be increased immediately.

Thereafter, when the operation of the scroll compressor C continues, the difference between the force F₁ and the force F₂ acting on the valve body 61 becomes smaller. Accordingly, the valve body 61 moves in a closing direction. Then, when the force F₁ and the force F₂ are balanced, the valve body 61 is seated on the valve seat 67. That is, the opening degree of the valve 70 transitions mainly within a range from an opening degree larger than that of the fixed orifice in Patent Citation 1 to an opening degree at which the valve 70 is closed.

As described above, since the back-pressure control valve V1 of the present embodiment is a normally open type, and the opening degree of the valve hole 65a is properly guaranteed during start-up of the scroll compressor C, the pressure of the control fluid Pb can be smoothly adjusted. In addition, since the back-pressure control valve V1 is a normally open type, and the back pressure is less likely to be insufficient, it is easy to satisfactorily control the compression efficiency of the scroll compression mechanism 4 even during start-up of the scroll compressor C.

In addition, since the back-pressure control valve V1 can vary the opening degree of the valve hole 65a during operation of the scroll compressor C, the pressure of the control fluid Pb can be smoothly adjusted.

In addition, since the effective pressure receiving surface A on which the pressure of the control fluid Pb acts is wider than the effective pressure receiving surface (A - B) on which the pressure of the discharge fluid Pd acts, the action of the pressure of the control fluid Pb which is relatively lower than the pressure of the discharge fluid Pd can be increased to improve responsiveness.

In addition, since the valve body 61 has the effective pressure receiving surface B on which the pressure of the suction fluid Ps acts, the accuracy of adjusting the pressure of the control fluid Pb is improved.

In addition, since the back-pressure control valve V1 is configured such that the gap between the high-pressure space S2 and the low-pressure space S1 is sealed by the O-ring 68, the discharge fluid Pd flowing into the high-pressure space S2 is prevented from leaking to the low-pressure space S1. Accordingly, valve internal leakage can be prevented, and a reduction in efficiency can be prevented.

In addition, since the coil spring 62 is disposed in the low-pressure space S1, the flow of the control fluid in the back-pressure space S3 is less likely to be obstructed.

In addition, since the back-pressure control valve V1 is provided with the stopper 69, the maximum opening degree of the valve hole 65a can be kept substantially constant. For this reason, the pressure of the control fluid Pb can be adjusted in a short time during start-up of the scroll compressor C.

In addition, since the valve body 61 is disposed so as to be able to close the valve hole 65a, an excessive increase in the pressure of the control fluid Pb can be reliably suppressed.

In addition, since the valve seat 67 in the valve hole 65a has a tapered shape, the flow efficiency is good even when the valve opening degree is narrow.

In addition, since the valve body 61 has the curved surface 61d at a region facing the valve seat 67, the valve body 61 comes into line contact with the valve seat 67 in the circumferential direction when seated on the valve seat 67, so that both sealing performance and opening/closing response can be achieved.

In addition, since the housing 60 is configured such that the second divided body 64 is press-fitted and fixed to the first divided body 63, and the amount of press-fitting is variable within the range of press-fitting allowance, not only can the biasing force of the coil spring 62 be adjusted, but the axial length of the housing 60 can also be adjusted.

In addition, since the valve body 61 is press-fitted and fixed to the stopper 69, and the amount of press-fitting is variable within the range of press-fitting allowance, the stroke amount of the valve body 61, in other words, the maximum opening degree of the valve 70 can be adjusted.

In addition, the stopper 69 can abut against the second divided body 64 of the housing 60 when the valve 70 is at the maximum opening degree, thereby sealing a gap between the stopper 69 and the second divided body 64. Accordingly, not only can it be made difficult for the discharge fluid Pd to leak from the high-pressure space S2 to the low-pressure space S1, but an effective pressure receiving surface wider than the effective pressure receiving surface B is also ensured, so that the maximum opening degree of the valve 70 is easily maintained.

In addition, the valve body 61 is aligned along an axis of the second divided body 64 by the elastic force of the O-ring 68. Accordingly, when the valve body 61 moves in the axial direction, an outer peripheral surface of the small-diameter body portion 61b and an inner peripheral surface of the valve hole 65a are less likely to come into sliding contact with each other, so that the frictional force to be generated is easily reduced.

### {Second embodiment}

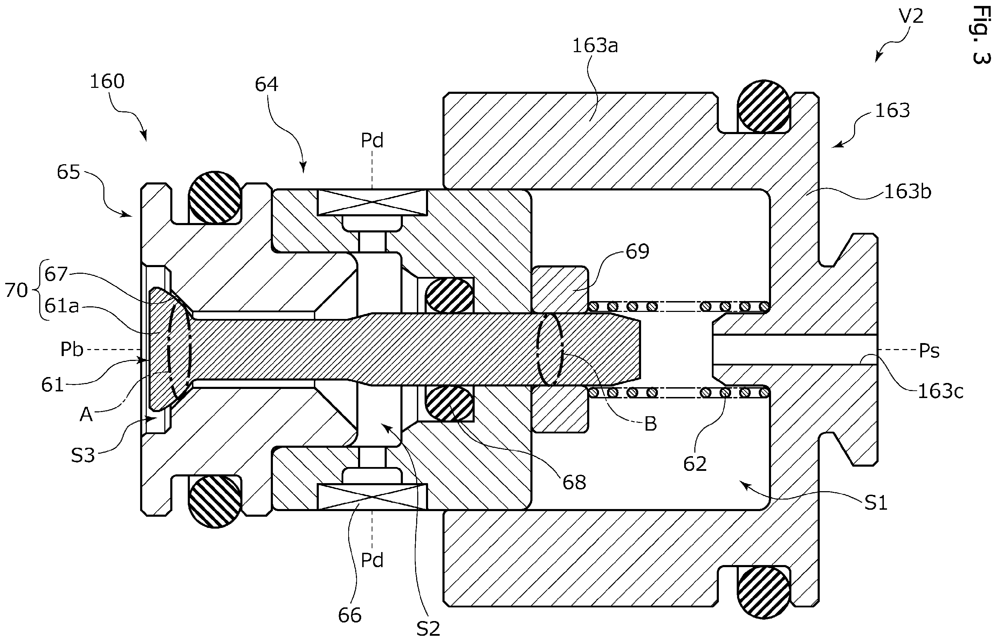

Next, a valve according to a second embodiment of the present invention will be described with reference to FIG. 3. Incidentally, the description of configurations that are the same as and overlap with the configurations of the above-described embodiment will be omitted.

As illustrated in FIG. 3, in a back-pressure control valve V2 of the second embodiment, a communication hole 163c penetrating through a first divided body 163 in the axial direction is formed in a side wall 163b of the first divided body 163 of a housing 160, whereas a communication hole of a peripheral wall 163a is omitted. In such a manner, the communication direction of the communication hole with respect to the low-pressure space S1 may be changed as appropriate. The same applies to the communication hole communicating with the high-pressure space S2 and the communication hole communicating with the back-pressure space S3.

As described above, in the configuration in which the communication hole 163c is formed in the side wall 163b, the second divided body 64 can be brought closer to the side wall 163b when press-fitted into the first divided body 63, compared to the configuration in which the communication hole 63c is formed in the peripheral wall 63a in the first embodiment. Namely, the axial length of the housing 160 can be adjusted over a wider range. In addition, the number of O-rings provided on an outer periphery of the first divided body 163 can be reduced to one.

The embodiments of the present invention have been described above with reference to the drawings; however, the specific configurations are not limited to these embodiments, and modifications or additions that are made without departing from the scope of the present invention are also included in the present invention.

For example, in the first and second embodiments, a configuration in which the valve body is seated on the valve seat to assume a valve closed state, that is, a configuration in which the force F1 and the force F2 are balanced has been described; however, the present invention is not limited thereto, and a configuration in which the valve body is not seated on the valve seat may be employed, and any configuration may be employed as long as the valve opening degree is variable.

In addition, in the first and second embodiments, a configuration in which the biasing member is a coil spring has been described; however, the present invention is not limited thereto, and the biasing member may be a coiled wave spring, a leaf spring, or an air spring, or may be changed as appropriate. As one example of an air spring, a gas such as nitrogen may be sealed in a space inside the first divided body. That is, as will be described later, the low-pressure receiving surface on which the suction fluid Ps acts may be omitted.

In addition, in the first and second embodiments, a configuration in which the biasing member functions as a compression spring has been described; however, the present invention is not limited thereto, and the biasing member may be a tension spring. If the biasing member is a tension spring, the biasing member may be disposed in the back-pressure space.

In addition, in the first and second embodiments, a configuration in which the high-pressure receiving surface is smaller than the back-pressure receiving surface has been described; however, the present invention is not limited thereto, and the size relationship between the pressure receiving surfaces may be changed as appropriate, or the pressure receiving surfaces may have the same size.

In addition, in the first and second embodiments, a configuration in which the valve body is provided with the low-pressure receiving surface has been described; however, the present invention is not limited thereto, and the low-pressure receiving surface may be omitted. For example, a configuration in which the space inside the first divided body communicates with the atmosphere and the atmospheric pressure acts on the valve body may be employed, or a configuration in which the first divided body is omitted, the right end of the second divided body is closed, and only the pressure of the discharge fluid Pd and the pressure of the control fluid Pb act on the valve body may be employed. In the latter configuration, the biasing member may be disposed in the high-pressure space or the back-pressure space.

In addition, in the first and second embodiments, a configuration in which the sealing member is an O-ring has been described; however, the present invention is not limited thereto, and as long as the gap between the high-pressure space and the low-pressure space can be sealed, the sealing member may be a lip packing, a gland packing, or the like, and a plurality of the sealing members as described above may be applied, or the sealing member may be changed as appropriate.

In addition, in the first and second embodiments, a configuration in which an orifice is provided in the pressure relief hole that allows communication between the low-pressure chamber and the back-pressure chamber has been described; however, the present invention is not limited thereto, and a relief valve or a pressure reducing valve may be provided in the pressure relief hole, or the configuration may be changed as appropriate.

In addition, in the first and second embodiments, the valve applied to a scroll compressor used in an air conditioning system for an automobile or the like has been described; however, the present invention is not limited thereto, and the valve may be used to control various working fluids.

In addition, in the first and second embodiments, an example in which the valve is a back-pressure control valve has been described; however, the valve may be, for example, an expansion valve disposed between a condenser and an evaporator in an air conditioning system, a capacity control valve incorporated in a variable capacity compressor in an air conditioning system, or the like.

In addition, each of the suction fluid, the discharge fluid, and the control fluid may be any of a gas, a liquid, and a mixture of gas and liquid.

### {REFERENCE SIGNS LIST}

60 Housing
61 Valve body
61d Curved surface (region facing tapered shape of passage)
62 Coil spring (biasing member)
65a Valve hole (passage)
67 Valve seat (tapered shape of passage)
68 O-ring (sealing member)
69 Stopper
70 Valve
160 Housing
A Effective pressure receiving surface (back-pressure receiving surface)
B Effective pressure receiving surface (low-pressure receiving surface)
A - B Effective pressure receiving surface (high-pressure receiving surface)
C Scroll compressor
Pb Control fluid (back-pressure fluid)
Pd Discharge fluid (high-pressure fluid)
Ps Suction fluid (low-pressure fluid)
S1 Low-pressure space
S2 High-pressure space
S3 Back-pressure space
V1, V2 Back-pressure control valve (valve)

## Claims

1. A valve, comprising:
a housing having a high-pressure space into which a high-pressure fluid flows, a back-pressure space into which a back-pressure fluid flows, and a passage configured to allow a communication between the high-pressure space and the back-pressure space;
a valve body that controls an opening degree of the passage; and
a biasing member configured to bias the valve body in a valve opening direction,
wherein the valve body has a high-pressure receiving surface configured to receive pressure in the high-pressure space as a force in the valve opening direction, and a back-pressure receiving surface configured to receive pressure in the back-pressure space as a force in a valve closing direction.

2. The valve according to claim 1,
wherein the back-pressure receiving surface is larger than the high-pressure receiving surface.

3. The valve according to claim 1 or 2,
wherein the housing has a low-pressure space into which a low-pressure fluid flows, and
the valve body has a low-pressure receiving surface that receives pressure in the low-pressure space as a force in the valve opening direction.

4. The valve according to claim 3,
wherein a sealing member is provided between the high-pressure space and the low-pressure space.

5. The valve according to claim 3,
wherein the biasing member is disposed in the low-pressure space.

6. The valve according to claim 1,
wherein the valve is provided with a stopper configured to restrict a relative movement of the valve body with respect to the housing.

7. The valve according to claim 1,
wherein the valve body is configured for closing the passage.

8. The valve according to claim 1,
wherein the passage has a tapered shape.

9. The valve according to claim 8,
wherein the valve body has a spherical shape at a region facing the tapered shape of the passage.
